# EUROPEAN PATENT SPECIFICATION

(11) **EP 3 185 735 B1**
(45) Date of publication and mention of the grant of the patent: **19.04.2023**
(21) Application number: 15757230.6
(22) Date of filing: 28.08.2015
(51) Int. Cl.: A47J 43/07

(54) **A WORKING TOOL FOR A KITCHEN APPLIANCE**
ARBEITSWERKZEUG FÜR EIN KÜCHENGERÄT
OUTIL DE TRAVAIL POUR UN APPAREIL DE CUISINE

(30) Priority: 29.08.2014 SI 201400295
(43) Date of publication of application: 05.07.2017
(73) Proprietor: BSH Hausgeräte GmbH, 81739 München (DE)
(72) Inventor: ORBANIC, Henri, 1000 Ljubljana (SI); UPLAZNIK, Marko, 3312 Prebold (SI); MALNERSIC, Ales, 1360 Vrhnika (SI); HOCEVAR, Marko, 1236 Trzin (SI); DULAR, Matevz, 1000 Ljubljana (SI); SIROK, Brane, 1360 Vrhnika (SI)
(86) International application number: PCT/EP2015/069730
(87) International publication number: WO 2016/030498

(56) References cited:
- EP-A1- 2 783 611
- EP-A2- 2 092 975
- DE-A1-102007 056 711
- US-A1- 2003 213 373
- US-A1- 2010 071 219
- US-B1- 8 132 752

## Description

### Background

The invention relates to the field of working tools, specifically blades, for kitchen appliances used for food processing.

### Prior art

Different working tools are known for use in kitchen appliances. The working tools may have a varying number of blades of varying shapes and sizes. The aim is for the working tool with blades to process food in the shortest possible time, with low energy consumption. The working tool should chop and mix the ingredients in the vessel completely. Since the aim is for the food to be processed at the highest possible peripheral velocity, which in turn is at its highest at the furthest point away from the rotation axis, the working tools should be designed in such a way that the majority of the sharp processing surfaces of the working tool are on this part of the working tool, i.e. as far away as possible from the center of rotation. A vortex is created during the rotation of the working tool, ensuring that the food ingredients are uniformly distributed and mixed throughout the processing vessel.

The working tool is driven by a motor, the velocity of which can be regulated by changing the current using a user switch or button. When processing solid food at a low rotation velocity, there is a danger of the motor overheating due to overload. The typical kitchen appliance (e.g. mixer or food processor) does not have a gearbox to change the velocity. Instead, an electromechanical device is used - a button or an electric switch - to connect different stator windings for different velocities.

The working tools usually used in commercially-available kitchen appliances have two or four blades which differ in shape and arrangement. The working tool blades may have a conical finish, making the blade sharp and enabling it to cut through the contents of the mixer more easily. The blades can also be stamped out, ground or serrated. The manufacturing of such working tools is easy enough for mass production, e.g. stamping, grinding and serration.

The known solutions often have problems in processing food in the initial phase, when the large, unprocessed pieces of food ingredients may get stuck in certain areas of the processing vessel, causing unprocessed food to remain at the end of the processing, or reducing the rotation frequency, thereby overloading the motor. This is often a hydrodynamic problem, in which it is very important to optimize the pattern and the velocity of circulation of the food being processed around the processing vessel in the time from one contact with the blade to the next.

DE 10 2007 056711 A1 discloses a tool attachment for a kitchen machine which can be rotated around an axis of rotation and has two kneading or stirring tools which extend outwardly and radially in relation to an axis of rotation. The tools have flat blades extending horizontally outward and upwardly from the axis of rotation in a hook-like manner and they protrude outward from a central attachment sleeve and diametrically oppositely from the attachment sleeve. They are arranged at a lower end of the attachment sleeve.

US 8 132 752 B1 discloses a blade structure comprising at least three pairs of blade arms constructed and arranged to create regions of material movement in a blender cup, wherein material is moved outward and upward in a lower region near outer walls of the blender cup, material is moved upward and inward in an upper region near the outer walls of the blender cup, material is chopped and moved downward in a region partway between the outer walls and a central axis of the blender cup, and material is moved downward near the central axis of the blender cup.

EP 2 092 975 A2 is concerned with a mixing device with a mixing pot attached to an inner wall of a mixing container. In the mixing pot which has a depth and is open towards the inside of the mixing container a rotor with rotor arms rotates around an axis oriented towards the interior of the mixing container.

### Purpose of the invention

The purpose of the invention is to improve the shape of working tools for kitchen appliances, enabling better food processing, especially at low rotation velocities.

### Solution to the problem

In order to achieve the purpose of the invention, a working tool for a kitchen appliance according to Claim 1 is described. As a second aspect of the invention, a kitchen appliance used to process food according to Claim 7 is described. Embodiments that can be implemented individually or in any combination thereof are the subject of the dependent claims.

According to the first aspect of the invention, a working tool for a kitchen is provided in accordance with claim 1.

This geometry enables the blade planes to be directed substantially parallel to the bottom and the walls of the processing vessel, reducing the possibility of food being stuck between the working tool and the vessel, reducing the risk of overloading the motor and blocking the working tool, especially during working tool start-up.

The second aspect of the invention describes a kitchen appliance used to process food, comprising the working tool according to Claim 1.

The purpose of the invention is achieved by optimizing the working tool, specifically blade, geometry in such a way that the rotation of the processed food ingredients in the processing vessel is directed in such a way as to reduce as much as possible the risk of the processed food being stuck in areas where it might remain unprocessed, or the risk of motor disturbance, e.g. reduced rotation frequency or a full stop.

### Embodiments of the invention

The embodiments which can be used individually or in any combination are subject of the subclaims.

The priority method of practicing the invention uses the outside part and the inside part of the working tool blades to process food. The outside parts of the blades of the working tool are rotating at the highest velocity. The shape of the working tool according to the invention has a large portion of the length of the blade in this area, which is due to the twisting of the outside parts of the working tool blades into the direction that is parallel to the rotation axis. This increases the food processing performance while reducing the risk of the food being stuck between the blade and the walls of the food processing vessel.

The second priority method uses a working tool with two blades, in which one outside part of the blade is oriented in one direction in regard to the rotation plane of the inside part of the blade, while the other outside part is oriented in the opposite direction. This achieves the highest possible distribution of cutting surfaces along the perimeter column of the food processing vessel. As stated before, the velocity and therefore the food processing performance is highest in this area.

Furthermore, the outside parts of the blades have an exit angle of 5-25°, preferably 15°, in the direction of rotation in regard to the perpendicular line to the plane of the inside parts of the blade. The performance of a rotating blade is highest if the blade is twisted forward in the direction of rotation. In addition to this effect, which is known from theory and has been confirmed in methods of practicing the invention, by tilting the outside part of the working tool blade, the tip of the blade can be offset in the direction closer to the food processing vessel wall. This is especially advantageous on the outside part of the blade which is curved upwards in case the vessel expands slightly along the radius towards the top part.

In a further embodiment, the exit angle of the tips of the outside parts of the blades is 20-50°, preferably 30°, to the perpendicular of the plane of the inside parts of the blades. Such geometry of the blade allows for a curved surface, which on the one hand increases the length of the blade, while varying the angles at which the blade makes contact with the food in the vortex, which can contribute to better and faster food processing. The shapes used may deviate from this shape, e.g. wavy shapes, serrated shapes etc.

According to the invention, the outside parts of the working tool blades are preferably sickle-shaped. This shape is a logical embodiment of the outside part of the working tool blade, as the exit angle of the outside parts of the blade against the perpendicular of the plane of the inside part of the blade is closer to zero degrees at the contact area between the inner and outer parts of the blade and the exit angle against said perpendicular at the tips of the outside parts is substantially larger.

In another embodiment, the functionality of the working tool is further improved with the inside parts of the working tool blades sharpened on the side in the direction towards the bottom of the processing vessel in order to produce a vortex directing the processed food in the direction towards the bottom of the processing vessel. This increases the exit radial velocity from the contact of food with the blade in the direction of the vortex in which the food rotates, positively influencing the food processing velocity and decreasing the risk of food being stuck.

Additionally, it is advantageous for the outside parts of the blades of the working tool to be sharpened on the outside, in the direction of the wall of the processing vessel. In addition to the radial component of food vortex acceleration, active directing of the food towards the bottom of the vessel was proven to have very positive effects, as it enables the area between the working tool and the bottom of the processing vessel to be included in the food vortex, thereby decreasing the possibility of food sticking or remaining in this area.

"Substantially parallel" and "substantially perpendicular" according to this invention are to be understood with some tolerance, that is with a possible deviation from the mathematical parallel and perpendicular relations by up to 15 degrees in either direction.

### Brief description of the drawings

Figure 1 shows a 3D model of the kitchen appliance working tool.
Figure 2 shows the main trajectories of circulation of food being processed in the processing vessel.
Figure 3 shows the trajectories in the vicinity of the blades of the working tool.

### Detailed description of the invention

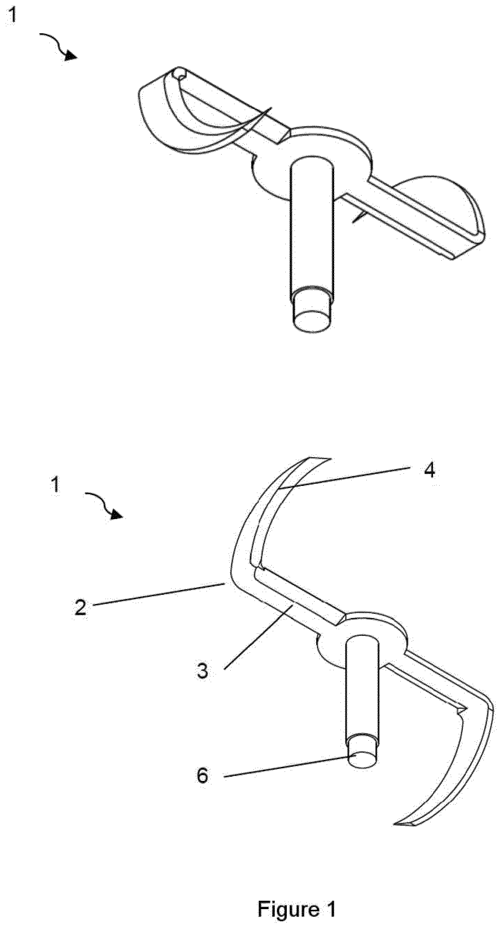

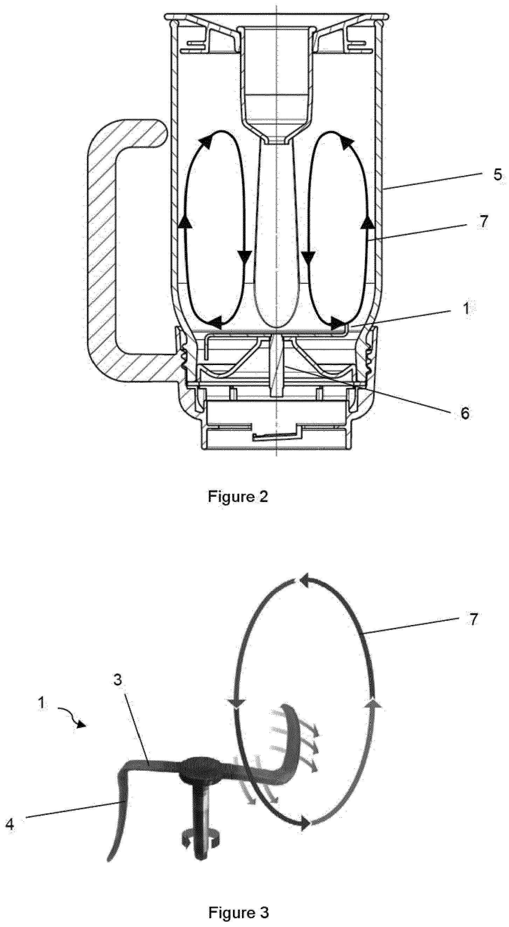

Figure 1 shows the working tool 1 for kitchen appliances. The working tool 1 is adapted in for faster processing of the food ingredients and for achieving higher exit velocities of the external vortex 7 (Figures 2 and 3). The working tool 1 is designed in such a fashion that it has outside parts 4 at the end of both blades 2, which are bent at the maximum radial distance from the rotation axis permitted by the shape of the processing vessel 5. One of the outside parts 4 is bent upwards, substantially perpendicular to the plane of the inside parts 3 of the blades 2, while the other is bent downwards, towards the bottom of the processing vessel. Preferably the planes of the working tools are substantially parallel to the contour of Processing Vessel 5 in the direction of the axis of rotation.

The outside parts 2 of the working tool 1, the planes of which are substantially parallel to the rotation axis, have an exit angle of 5-25°, preferably 15°, towards the wall of the processing vessel 5 in the direction of rotation of the working tool 1. The outside parts 4 of the blades 2 of the working tool 1 are then sickle-shaped, whereby the final angle at the tips of the working tool 1 is 20-50°, preferably 30°. As per the theory of rotor turbines, this shape of the blades 2 of the working tool 1 increases the transfer of energy from the blades to the food being processed. This enables better displacement of the processed food towards the internal wall of the processing vessel 5. The radial velocity of the working tool 1 is the highest possible radial velocity permitted by the limited radius of the processing vessel 5, thus increasing the circulation and mixing of the food being processed in the food processing vessel 5. This increases the radial exit velocity of the food being processed after contact with the working tool 1. The outside parts 4 of the blades 2, i.e. the outside part 4 of the blade 2 which is bent upwards in regard to the plane of inside parts 3 of the blades 2, and the outside part 4 of the blade 2 of the working tool 1, which is bent downwards, can be of the same or different size and shape, however the balance of the working tool 1 during rotation must be maintained.

Figure 2 shows the vortex 7 of the circulation of food being processed in the processing vessel 5. The working tool 1 is sharpened on all the forward parts of the working tool in the direction of rotation. In order to improve both the velocity and the pattern of circulation, the outside parts 4 of the blades 2 of the working tool 1 are sharpened on the outside, that is on the part further away from the center of rotation, in order to direct the flow of the processed food predominantly in the direction towards the wall of the processing vessel 5 (Figure 3). The inside parts 3 of the blades 2 of the working tool 1 are sharpened on the bottom, that is on the side facing the bottom of the processing vessel 5, in order to direct the flow of the processed food predominantly towards the bottom of the processing vessel 5. With the exception of the sharpened parts of the working tool 1, all surfaces of the blades 2 are preferably positioned substantially parallel to the bottom or the wall of the processing vessel 5, thus reducing the risk of food being stuck between the working tool 1 and the processing vessel 5. Furthermore, the surfaces where the food is being processed could become stuck due to the large distance to the cutting edge of the blade 2 of the working tool 1. This arrangement is especially important during starting of the working tool 1, as the angular velocity and the power of the working tool 1 are at their lowest, increasing the risk of the food getting stuck.

The working tool 1 is sharpened on the inside part 3 of the blades 2, the plane of said inside part 3 being substantially perpendicular to the axis of rotation, resulting in the processed food being directed towards the bottom of the vessel and then returning to the top, increasing the circular component of the movement of the food being processed. Without such sharpening, the inside part 3 of the blade 2 of the working tool 1 would only deflect and partially break chunks of the food being processed, e.g. pieces of carrot, possibly causing them to get stuck and decreasing the rotation frequency. The effects of circular movement can be increased by introducing tilting of the inside parts 3 of the blades 2 of working tool 1 in relation to the plane perpendicular to the direction of rotation, which would result in an additional upward or downward force enabling an improved rotational stabilization of the blades 2 of the working tool 1.

### List of Reference Numerals

- 1: working tool
- 2: blade
- 3: inside part of the blade
- 4: outside part of the blade
- 5: processing vessel
- 6: holder
- 7: vortex of circulation of food being processed

## Claims

1. A working tool (1) for a kitchen appliance, adapted to be rotationally driven, consisting of two or more blades (2) for food processing, wherein at least one blade consists of the inside part (3) of the blade (2) and the outside part (4) of the blade (2), and in which each inside part (3) of the blade (2) is in contact with a holder (6) while extending in a plane substantially perpendicular to the rotation axis, and each outside part (4) of the blade (2) is in the vicinity of the wall of the processing vessel (5) and extends in a plane substantially parallel to the rotation axis, wherein the working tool (1) has two blades (2), **characterized in that** the one outside part (4) of the blade (2) is oriented in one direction in regard to the rotation plane of the inside part (3) of the blade (2), while the other outside part is oriented in the opposite direction, wherein
the outside parts (4) of the blades (2) of the working tool (1) are sickle-shaped.

2. The working tool (1) according to Claim 1, **characterized in that** the outside parts (4) of the blades (2) of the working tool (1) are used to process food.

3. The working tool (1) according to any of the previous claims, **characterized in that** the outside parts (4) of the blades (2) have an exit angle of 5-25°, preferably 15°, in the direction of rotation of the working tool (1) in regard to the perpendicular to the plane of the inside parts (3) of the blade (2).

4. The working tool (1) according to any of the previous claims, **characterized in that** the exit angle of the tips of outside parts (4) of the blades (2) has an exit angle of 20-50°, preferably 30° against the perpendicular to the plane of inside parts (3) of the blades (2).

5. The working tool (1) according to any of the previous claims, **characterized in that** the inside parts (3) of the blades (2) of the working tool (1 ) are sharpened on the side in the direction towards the bottom of the processing vessel (5), in order to produce a vortex (7) directing the processed food in the direction towards the bottom of the processing vessel (5).

6. The working tool (1) according to any of the previous claims, **characterized in that** the outside parts (4) of the blades (2) of the working tool (1) are sharpened on the outside, in the direction of the wall of the processing vessel (5), in order to direct the flow of the processed food towards of the wall of the processing vessel (5).

7. A kitchen appliance used to process food comprising the working tool (1) according to any of the previous claims.

## Patentansprüche

1. Arbeitswerkzeug (1) für ein Küchengerät, das so ausgelegt ist, dass es drehangetrieben wird, und aus zwei oder mehr Klingen (2) für die Lebensmittelverarbeitung besteht, wobei mindestens eine Klinge aus dem Innenteil (3) der Klinge (2) und dem Außenteil (4) der Klinge (2) besteht und sich jeder Innenteil (3) der Klinge (2) mit einer Halterung (6) in Kontakt befindet und sich dabei in einer Ebene erstreckt, die im Wesentlichen senkrecht zur Rotationsachse verläuft, und sich jeder Außenteil (4) der Klinge (2) in der Nähe der Wand des Verarbeitungsbehälters (5) befindet und sich in einer im Wesentlichen parallel zur Rotationsachse verlaufenden Ebene erstreckt, wobei das Arbeitswerkzeug (1) zwei Klingen (2) aufweist, **dadurch gekennzeichnet, dass** der eine Außenteil (4) der Klinge (2) in Bezug auf die Rotationsebene des Innenteils (3) der Klinge (2) in eine Richtung ausgerichtet ist, während der andere Außenteil in die entgegengesetzte Richtung ausgerichtet ist, wobei
die Außenteile (4) der Klingen (2) des Arbeitswerkzeugs (1) sichelförmig sind.

2. Arbeitswerkzeug (1) nach Anspruch 1, **dadurch gekennzeichnet, dass** die Außenteile (4) der Klingen (2) des Arbeitswerkzeugs (1) zum Verarbeiten von Lebensmitteln benutzt werden.

3. Arbeitswerkzeug (1) nach einem der vorhergehenden Ansprüche, **dadurch gekennzeichnet, dass** die Außenteile (4) der Klingen (2) in Bezug zur Senkrechten zu der Ebene der Innenteile (3) der Klinge (2) einen Austrittswinkel von 5-25°, vorzugsweise 15° in Rotationsrichtung des Arbeitswerkzeugs (1) aufweisen.

4. Arbeitswerkzeug (1) nach einem der vorhergehenden Ansprüche, **dadurch gekennzeichnet, dass** der Austrittswinkel der Spitzen der Außenteile (4) der Klingen (2) 20-50°, vorzugsweise 30° zur Senkrechten zu der Ebene der Innenteile (3) der Klingen (2) beträgt.

5. Arbeitswerkzeug (1) nach einem der vorhergehenden Ansprüche, **dadurch gekennzeichnet, dass** die Innenteile (3) der Klingen (2) des Arbeitswerkzeugs (1) auf der in Bodenrichtung des Verarbeitungsbehälters (5) liegenden Seite angeschliffen sind, damit ein Wirbel (7) entsteht, der das verarbeitete Lebensmittel in Bodenrichtung des Verarbeitungsbehälters (5) leitet.

6. Arbeitswerkzeug (1) nach einem der vorhergehenden Ansprüche, **dadurch gekennzeichnet, dass** die Außenteile (4) der Klingen (2) des Arbeitswerkzeugs (1) auf der in Wandrichtung des Verarbeitungsbehälters (5) liegenden Außenseite angeschliffen sind, damit das verarbeitete Lebensmittel in Wandrichtung des Verarbeitungsbehälters (5) geleitet wird.

7. Küchengerät, das zum Verarbeiten von Lebensmitteln benutzt wird und das Werkzeug (1) nach einem der vorhergehenden Ansprüche umfasst.

## Revendications

1. Ustensile de travail (1) pour un appareil de cuisine, convenant à l'entraînement par rotation, constitué de deux lames (2) ou plus destinées au traitement des aliments, dans lequel au moins une lame est constituée de la partie intérieure (3) de la lame (2) et de la partie extérieure (4) de la lame (2), et dans lequel chaque partie intérieure (3) de la lame (2) est en contact avec un support (6) tout en s'étendant dans un plan essentiellement perpendiculaire à l'axe de rotation, et chaque partie extérieure (4) de la lame (2) est proche de la paroi du récipient de traitement (5) et s'étend dans un plan essentiellement parallèle à l'axe de rotation, dans lequel l'ustensile de travail (1) comprend deux lames (2), **caractérisé en ce que** la première partie extérieure (4) de la lame (2) est orientée dans une direction par rapport au plan de rotation de la partie intérieure (3) de la lame (2), tandis que l'autre partie extérieure est orientée dans la direction opposée, dans lequel les parties extérieures (4) des lames (2) de l'ustensile de travail (1) sont en forme de faucille.

2. Ustensile de travail (1) selon la revendication 1, **caractérisé en ce que** les parties extérieures (4) des lames (2) de l'ustensile de travail (1) sont utilisées pour traiter des aliments.

3. Ustensile de travail (1) selon l'une quelconque des revendications précédentes, **caractérisé en ce que** les parties extérieures (4) des lames (2) ont un angle de sortie de 5-25°, de préférence de 15°, dans le sens de rotation de l'ustensile de travail (1) par rapport à la perpendiculaire du plan des parties intérieures (3) de la lame (2).

4. Ustensile de travail (1) selon l'une quelconque des revendications précédentes, **caractérisé en ce que** l'angle de sortie des bouts des parties extérieures (4) des lames (2) a un angle de sortie de 20-50°, de préférence de 30° contre la perpendiculaire du plan des parties intérieures (3) des lames (2).

5. Ustensile de travail (1) selon l'une quelconque des revendications précédentes, **caractérisé en ce que** les parties intérieures (3) des lames (2) de l'ustensile de travail (1) sont aiguisées sur le côté dans le sens vers le fond du récipient de traitement (5), afin de produire un vortex (7) dirigeant les aliments traités vers le fond du récipient de traitement (5).

6. Ustensile de travail (1) selon l'une quelconque des revendications précédentes, **caractérisé en ce que** les parties extérieures (4) des lames (2) de l'ustensile de travail (1) sont aiguisées sur l'extérieur en direction de la paroi du récipient de traitement (5), afin de diriger le flux des aliments traités vers la paroi du récipient de traitement (5).

7. Appareil de cuisine utilisé pour traiter des aliments, comprenant l'ustensile de travail (1) selon l'une quelconque des revendications précédentes.
